# EUROPEAN PATENT APPLICATION

(11) **EP 4 135 358 A1**
(43) Date of publication of application: **15.02.2023**
(21) Application number: 21205324.3
(22) Date of filing: 28.10.2021
(51) Int. Cl.: H04W 4/029, B60L 53/60

(54) **METHOD, APPARATUS, AND COMPUTER PROGRAM PRODUCT FOR PREDICTING ELECTRIC VEHICLE CHARGE POINT UTILIZATION**

(30) Priority: 13.08.2021 US 202117445036
(71) Applicant: HERE Global B.V., 5611 ZT Eindhoven (NL)
(72) Inventor: BEAUREPAIRE,, Jerome, 10115 Berlin (DE); KOVAL,, Dmitry, 10115 Berlin (DE); SCHULTING,, Steven, 10115 Berlin (DE); NEUBAUER,, Nicolas, 10115 Berlin (DE); TIMMER,, Remco, 10115 Berlin (DE)
(74) Representative: Potter Clarkson

(57) **Abstract**

Embodiments described herein relate to predicting the utilization of electric vehicle (EV) charge points. Methods may include: receiving an indication of a plurality of candidate locations for EV charge points; determining static map features of the plurality of candidate locations; inputting the plurality of candidate locations and static map features into a machine learning model, where the machine learning model is trained on existing EV charge point locations, existing EV charge point static map features, and existing EV charge point utilization; determining, based on the machine learning model, a predicted utilization of an EV charge point at the plurality of candidate locations; and generating a representation of a map including the plurality of candidate locations, where candidate locations of the plurality of candidate locations are visually distinguished based on a respective predicted utilization of an EV charge point at the candidate locations.

## Description

### TECHNOLOGICAL FIELD

An example embodiment of the present disclosure relates to identifying locations for new electric vehicle (EV) charging points, and more particularly, to predicting electric vehicle charge point utilization to improve return-on-investment for constructing EV charging points.

### BACKGROUND

Electric vehicle (EV) adoption has become widespread and is predicted to continue to grow strongly in coming years. EVs are generally efficient and produce few if any emissions while driving. However, the EV charging infrastructure available in most countries substantially lags the petroleum fuel infrastructure, and is struggling to keep pace with the rate of adoption of EVs. The required public EV charging infrastructure requires substantial investment to keep up with the growing number of EVs.

Consumers rank not having enough access to efficient charging stations as the third most serious barrier to EV purchase, behind EV price and EV driving range on a charge. With EV prices declining (with or without governmental subsidies) and driving range increasing, charging station availability may soon be the greatest barrier to increased EV adoption.

The charging infrastructure available includes too few charging points for which there is too much demand, broken chargers, high rates (cost), and confusion about how to pay and how long is needed to charge a vehicle. The charging infrastructure poses one of the biggest challenges facing widespread adoption of EVs. However, the solution is not to geographically disperse new charging stations in an equally dispersed manner or simply to place charging stations in EV charge point deserts, but to build new charge points where they are needed most.

### BRIEF SUMMARY

A method, apparatus, and computer program product are provided in accordance with an example embodiment described herein for identifying locations for new electric vehicle (EV) charging points, and more particularly, to predicting electric vehicle charge point utilization. Accurate predictions may improve the efficiency with which new electrical networks can be designed and operated to provide power to EV charging points. In some examples, such predictions may also improve return-on-investment for constructing EV charging points. Embodiments provide a method, apparatus, and computer program product to predict EV charge point utilization through geospatial data processing, regression analysis, and supervised machine learning. According to an example embodiment, an apparatus is provided including at least one processor and at least one memory including computer program code, the at least one memory and computer program code configured to, with the processor, cause the apparatus to at least: identify existing electric vehicle (EV) charge points and their respective locations; determine static map features for the locations of the existing EV charge points; determine utilization of the existing EV charge points; train a machine learning model on the static map features for the locations of the existing EV charge points and the utilization of the existing EV charge points; provide a candidate location and static map features associated with the candidate location; and determine, based on the machine learning model using the candidate location and the static map features associated with the candidate location, a predicted utilization of an EV charge point at the candidate location.

According to some embodiments, the apparatus is further caused to determine dynamic features for the locations of the existing EV charge points, where causing the apparatus to train the machine learning model on the static map features for the locations of the existing EV charge points and the utilization of the existing EV charge points includes causing the apparatus to train the machine learning model on the static map features and the dynamic features for the locations of the existing EV charge points and the utilization of the existing EV charge points, and where causing the apparatus to input to the machine learning model the candidate location and static map features associated with the candidate location includes causing the apparatus to input to the machine learning model the candidate location, the static map features associated with the candidate location, and dynamic features associated with the candidate location.

The static map features of some embodiments associated with the candidate location and the dynamic features associated with the candidate location form a candidate location vector, where the candidate location vector is input to the machine learning model. The static map features of the candidate location include, in some embodiments, one or more of: point-of-interest (POI) categories proximity to the candidate location, POI categories density relative to the candidate location, functional class of road proximate the candidate location, or population density proximate the candidate location. Dynamic map features of the candidate location include, in some embodiments, one or more of: traffic density proximate the candidate location, weather proximate the candidate location, population estimates proximate the candidate location, event information, time of day, day of week, or season of year.

According to some embodiments, the apparatus is further caused to: input to the machine learning model a plurality of candidate locations for EV charge points and static map feature associated with the candidate locations; determine, based on the machine learning model, a predicted utilization of EV charge points at the plurality of candidate locations for EV charge points; and rank the plurality of candidate locations for EV charge points based on their respective predicted utilization of EV charge points at a corresponding location. The apparatus of some embodiments is further caused to identify a selected location from the plurality of candidate locations for EV charge points based on the ranked plurality of candidate locations for EV charge points, and provide a recommendation for establishment of an EV charge point at the selected location. The apparatus of some embodiments is further caused to generate a representation of a map encompassing the plurality of candidate locations, and provide for visual distinction of the plurality of candidate locations based on predicted utilization of EV charge points at the corresponding location.

Embodiments described herein include a computer program product having at least one non-transitory computer-readable storage medium having computer-executable program code portions stored therein, the computer-executable program code portions including program code instructions configured to: receive an indication of a candidate location for an EV charge point; determine static map features of the candidate location; process the candidate location and static map features using a machine learning model, where the machine learning model is trained on existing EV charge point locations, existing EV charge point static map features, and existing EV charge point utilization; and determine, based on the machine learning model, a predicted utilization of an EV charge point at the candidate location.

The computer program product of some embodiments further includes program code instructions to determine dynamic features of the candidate location, where the machine learning model is further trained on existing EV charge point dynamic features. The static map features associated with the candidate location and the dynamic features associated with the candidate location, in some embodiments, form a candidate location vector, where the candidate location vector is input to the machine learning model. The static map features of the candidate location include, in some embodiments, one or more of: point-of-interest (POI) categories proximity to the candidate location, POI categories density relative to the candidate location, functional class of road proximate the candidate location, or population density proximate the candidate location. The dynamic map features of the candidate location include, in some embodiments, one or more of: traffic density proximate the candidate location, weather proximate the candidate location, population estimates proximate the candidate location, event information, time of day, day of week, or season of year.

The computer program product of some embodiments further includes program code instructions to: input to the machine learning model a plurality of candidate locations for EV charge points and static map features associated with the candidate locations; determine, based on the machine learning model, a predicted utilization of EV charge points at the plurality of candidate locations for EV charge points; and rank the plurality of candidate locations for EV charge points based on their respective predicted utilization of EV charge points at a corresponding location. Embodiments optionally include program code instructions to: identify a selected location from the plurality of candidate locations for EV charge points based on the ranked plurality of candidate locations for EV charge points; and provide a recommendation for establishment of an EV charge point at the selected location. The computer program product of some embodiments further includes program code instructions to: generate a representation of a map encompassing the plurality of candidate locations; and provide for visual distinction of the plurality of candidate locations based on a predicted utilization of EV charge points at a corresponding location.

Embodiments provided herein include a method including: receiving an indication of a plurality of candidate locations for EV charge points; determining static map features of the plurality of candidate locations; processing the plurality of candidate locations and static map features using a machine learning model, where the machine learning model is trained on existing EV charge point locations, existing EV charge point static map features, and existing EV charge point utilization; determining, based on the machine learning model, a predicted utilization of an EV charge point at the plurality of candidate locations; and generating a representation of a map including the plurality of candidate locations, where candidate locations of the plurality of candidate locations are visually distinguished based on a respective predicted utilization of an EV charge point at the candidate locations.

Methods of some embodiments include ranking the plurality of candidate locations for EV charge points based on their respective predicted utilization of EV charge points at a corresponding location. Candidate locations of the plurality of candidate locations are visually distinguished, in some embodiments, using one or more highlighting effects to represent predicted utilization of EV charge points at the corresponding location. The static map features of a candidate location of the plurality of candidate location forms, in some embodiments, a candidate location vector for the candidate location, where the candidate location vector is input to the machine learning model to determine the predicted utilization of an EV charge point at the candidate location.

Embodiments provided herein include an apparatus including: means for receiving an indication of a plurality of candidate locations for EV charge points; means for determining static map features of the plurality of candidate locations; means for inputting the plurality of candidate locations and static map features into a machine learning model, where the machine learning model is trained on existing EV charge point locations, existing EV charge point static map features, and existing EV charge point utilization; means for determining, based on the machine learning model, a predicted utilization of an EV charge point at the plurality of candidate locations; and means for generating a representation of a map including the plurality of candidate locations, where candidate locations of the plurality of candidate locations are visually distinguished based on a respective predicted utilization of an EV charge point at the candidate locations.

The apparatus of some embodiments includes means for ranking the plurality of candidate locations for EV charge points based on their respective predicted utilization of EV charge points at a corresponding location. Candidate locations of the plurality of candidate locations are visually distinguished, in some embodiments, using one or more highlighting effects to represent predicted utilization of EV charge points at the corresponding location. The static map features of a candidate location of the plurality of candidate location forms, in some embodiments, a candidate location vector for the candidate location, where the candidate location vector is input to the machine learning model to determine the predicted utilization of an EV charge point at the candidate location.

According to a further aspect, there is provided a computer-implemented method comprising: receiving an indication of a plurality of candidate locations for electric vehicle "EV" charge points; determining static map features of the plurality of candidate locations; processing the plurality of candidate locations and static map features using a machine learning model, the machine learning model trained on existing EV charge point locations, existing EV charge point static map features, and existing EV charge point utilization; determining, based on the machine learning model, a respective predicted utilization of a respective EV charge point at each of the plurality of candidate locations; and generating a representation of a map including the plurality of candidate locations, wherein candidate locations of the plurality of candidate locations are visually distinguished based on the respective predicted utilization of the respective EV charge point at each of the candidate locations.

In some examples, ranking the plurality of candidate locations for EV charge points may be based on their respective predicted utilization of EV charge points at a corresponding location.

In some examples, candidate locations of the plurality of candidate locations may be visually distinguished using one or more highlighting effects to represent the respective predicted utilization of EV charge points at the corresponding location.

In some examples, the static map features of a candidate location of the plurality of candidate locations may form a candidate location vector for the candidate location, wherein the candidate location vector may be input to the machine learning model to determine the predicted utilization of an EV charge point at the candidate location.

Some examples may include generating a site value for each of the candidate locations of the plurality of candidate locations, wherein each site value may be based on the respective predicted utilization of an EV charge point at the respective candidate location.

Some examples may include generating a recommended number of EV charge points for each of the candidate locations of the plurality of candidate locations, wherein the number of EV charge points may be based on the respective predicted utilization of an EV charge point at the respective candidate location.

According to a further aspect, there is provided a computer-implemented method comprising: identifying existing electric vehicle "EV" charge points and their respective locations; determining static map features for the locations of the existing EV charge points; determining utilization of the existing EV charge points; training a machine learning model on the static map features for the locations of the existing EV charge points and the utilization of the existing EV charge points; and providing the trained machine learning model for use in predicting utilization of an EV charge point at a candidate location.

Some examples may include providing a candidate location and static map features associated with the candidate location; and determining, based on the machine learning model using the candidate location and the static map features associated with the candidate location, a predicted utilization of an EV charge point at the candidate location.

Some examples may include determining dynamic features for the locations of the existing EV charge points, wherein training the machine learning model on the static map features for the locations of the existing EV charge points and the utilization of the existing EV charge points may comprise training the machine learning model on the static map features and dynamic features for the locations of the existing EV charge points and the utilization of the existing EV charge points, and inputting to the machine learning model the candidate location and static map features associated with the candidate location may comprise inputting to the machine learning model the candidate location, the static map features associated with the candidate location, and dynamic features associated with the candidate location.

In some examples, the static map features associated with the candidate location and the dynamic features associated with the candidate location may form a candidate location vector, wherein the candidate location vector may be input to the machine learning model.

In some examples, the static map features of the candidate location may comprise one or more of: point-of-interest (POI) categories proximity to the candidate location, POI categories density relative to the candidate location, functional class of road proximate the candidate location, or population density proximate the candidate location.

In some examples, the dynamic map features of the candidate location may comprise one or more of: traffic density proximate the candidate location, weather proximate the candidate location, population estimates proximate the candidate location, event information, time of day, day of week, or season of year.

Some examples may comprise inputting to the machine learning model a plurality of candidate locations for EV charge points and static map features associated with the candidate locations; determining, based on the machine learning model, a predicted utilization of EV charge points at the plurality of candidate locations for EV charge points; and ranking the plurality of candidate locations for EV charge points based on their respective predicted utilization of EV charge points at a corresponding location.

Some examples may comprise identifying a selected location from the plurality of candidate locations for EV charge points based on the ranked plurality of candidate locations for EV charge points; and providing a recommendation for establishment of an EV charge point at the selected location.

Some examples may comprise generating a representation of a map encompassing the plurality of candidate locations; and providing for visual distinction of the plurality of candidate locations based on predicted utilization of EV charge points at a corresponding location.

According to further aspects there may be provided an apparatus or a computer program configured to perform any method disclosed herein.

According to a further aspect there may be provided a computer program product comprising at least one non-transitory computer-readable storage medium having computer-executable program code portions stored therein the computer-executable program code portions comprising program code instructions which when executed on a processor are configured to perform any method disclosed herein.

Embodiments described herein include a computer program product having computer-executable program code portions stored therein, the computer-executable program code portions including program code instructions configured to perform any method disclosed herein.

Embodiments described herein include a non-transitory computer-readable storage medium having computer-executable program code portions stored therein, the computer-executable program code portions including program code instructions which when executed on a processor are configured to perform any method disclosed herein.

According to a further aspect there may be provided a trained machine learning product for use in identifying candidate locations for EV charge points based on predicted utilization of the EV charge points at the candidate locations.

### BRIEF DESCRIPTION OF THE DRAWINGS

Having thus described example embodiments of the disclosure in general terms, reference will now be made to the accompanying drawings, which are not necessarily drawn to scale, and wherein:
Figure 1 illustrates a communications diagram in accordance with an example embodiment of the present disclosure;
Figure 2 is a block diagram of an apparatus that may be specifically configured for predicting EV charge point utilization in accordance with an example embodiment of the present disclosure;
Figure 3 illustrates a schematic of a principle of converting location data into a site value according to example embodiments of the present disclosure;
Figure 4 is a message flow diagram of a method of predicting utilization of EV charge points based on a supervised machine learning model according to an example embodiment of the present disclosure;
Figure 5 illustrates another example embodiment of the training of the machine learning model used to predict EV charge point utilization according to an example embodiment of the present disclosure;
Figure 6 illustrates a table of charge point attributes according to an example embodiment of the present disclosure;
Figure 7 illustrates a method of visually distinguishing candidate locations for EV charge points based on their predicted utilization according to an example embodiment of the present disclosure; and
Figure 8 is a flowchart of a method for predicting utilization of EV charge points based on supervised machine learning model according to an example embodiment of the present disclosure.

### DETAILED DESCRIPTION

Some embodiments of the present disclosure will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the scope of embodiments of the present disclosure.

In the infancy of vehicles powered by internal combustion engines the availability of fuel was challenging and limited the range of these vehicles to the distance they could travel based on the amount of fuel they could carry. Gradually, petroleum fueling stations were built to accommodate the burgeoning age of mass-produced vehicles. Eventually, petroleum fueling stations became ubiquitous allowing travelers to drive a vehicle to virtually any location reachable by roadways without concern for where they may obtain fuel along the way. Electric vehicles (EVs) in their relative infancy are experiencing the same issues experienced at the infancy of the internal combustion engine powered vehicle. Electric charging stations are not yet ubiquitous, and demand outstrips availability in most regions. The EV charging infrastructure has not kept up with the rapid development and growth of EVs in many countries, hindering the adoption and growth of the EV market.

Widespread adoption of electric vehicles is almost inevitable with automotive manufacturers poised to convert their entire model lineups to EVs by ever-nearer deadlines in the future. The goals of these automotive manufacturers are laudable; however, these deadlines may be hindered by the EV charging infrastructure. With manufacturers ready to switch to and/or increase EV production, a lack of sufficient charging infrastructure can forestall those plans. With EVs producing fewer, if any, emissions while driving, notwithstanding charge-source power which can be renewable, delaying adoption of EVs over internal combustion engine-powered vehicles, despite their ever-improving efficiencies, can delay necessary overall emissions reductions. Thus, a robust and effective charging infrastructure is needed to ensure that charge point availability is not a hinderance in the widespread adoption of EVs.

While EV charge points can be selected based on geographic dispersion and proximity of other charge points, such a method does not address issues of availability and utilization. Embodiments provided herein provide a method of predicting where to locate EV charge points based on predicted EV charge point utilization through geospatial data processing, regression analysis, and supervised machine learning. Embodiments of the present invention establish locations where EV charge points will be most effective and efficiently utilized and may also provide the greatest return-on-investment (ROI) based, at least in part, on their utilization. This strategic positioning of EV charge points can lead to an efficient and effective EV charge point infrastructure where charge points are placed where they are most likely to be used and have the highest utility to consumers. Tackling the locations where EV charge point utilization will be highest allows the building out of an EV charging infrastructure in a methodical way that maximizes usage, thereby benefiting EV adoption most effectively.

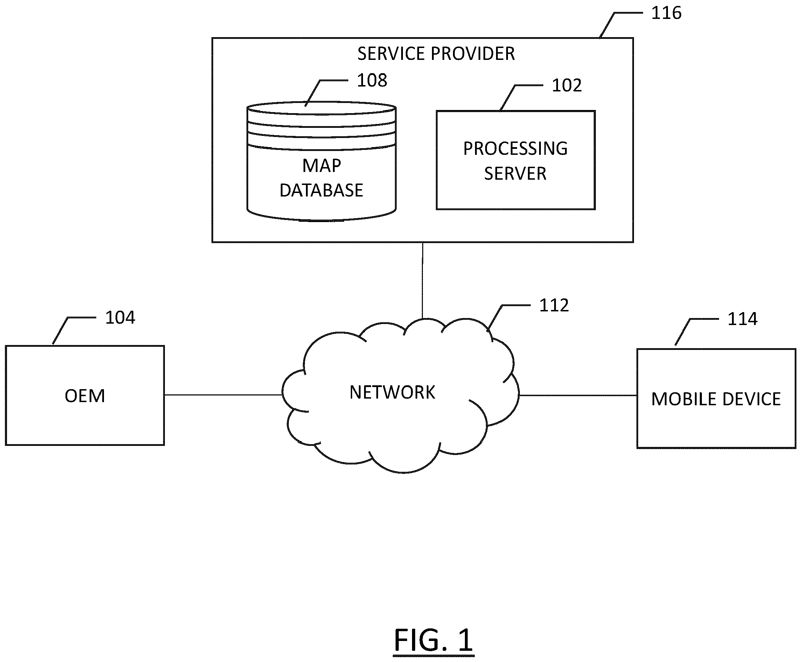

To predict EV charge point utilization, a system as illustrated in Figure 1 may be employed. Figure 1 illustrates a communication diagram of an example embodiment of a system for implementing example embodiments described herein. The illustrated embodiment of Figure 1 includes a service provider 116, a processing server 102 in data communication with a geographic map database, e.g., map database 108 through a network 112, one or more mobile devices 114, and an OEM 104 (Original Equipment Manufacturer). The mobile device 114 may be associated, coupled, or otherwise integrated with a vehicle, such as in a vehicle's head unit, infotainment unit, or an advanced driver assistance system (ADAS), for example. Additional, different, or fewer components may be provided. For example, many mobile devices 114 may connect with the network 112. The service provider 116 may include computer systems and network of a system operator. The processing server 102 may include the map database 108, such as a remote map server. The network may be wired, wireless, or any combination of wired and wireless communication networks, such as cellular, Wi-Fi, internet, local area networks, or the like.

The OEM 104 may include a server and a database configured to receive probe data from vehicles or devices corresponding to the OEM. For example, if the OEM is a brand of automobile, each of that manufacturer's automobiles (e.g., mobile device 114) may provide probe data to the OEM 104 for processing. That probe data may be encrypted with a proprietary encryption or encryption that is unique to the OEM. The OEM may be the manufacturer or service provider for a brand of vehicle or a device. For example, a mobile device carried by a user (e.g., driver or occupant) of a vehicle may be of a particular brand or service (e.g., mobile provider), where the OEM may correspond to the particular brand or service. The OEM may optionally include a service provider to which a subscriber subscribes, where the mobile device 114 may be such a subscriber. While depicted as an OEM 104 in Figure 1, other entities may function in the same manner described herein with respect to the OEM. For example, independent location-based service providers or other entities may participate and contribute in the same manner as described herein with respect to an OEM. As such, the OEM 104 illustrated in Figure 1 is not limited to original equipment manufacturers, but may be any entity participating as described herein with respect to the OEMs.

The OEM 104 may provide aggregated mobility data from a plurality of probes or devices associated with a respective OEM. In this manner, the OEM 104 may be a data source that can provide substantial information to the service provider 116 for use in predicting EV charge point utilization. Further, an OEM can anonymize data from the probes or devices associated with the OEM or subscribed to a service of the OEM. Anonymized mobility data may be anonymized in such a manner as to not reveal the source of the mobility data, but may still provide valuable insight as to how the mobility data may facilitate EV charge point utilization analysis. For example, an OEM may provide probe data points including location (e.g., latitude and longitude or a map-matched location) and a charge level or available battery range of a vehicle. Such information can provide insight into locations where vehicles are substantially depleted on battery charge as described further below.

The OEM 104 may further provide charge status information for individual vehicles. While this information may be readily available from an OEM, this data may come from other sources, such as an app running on a vehicle, a service used by the driver/owner of a vehicle, or other service provider that can obtain and share charge status information for a vehicle. Battery charge level (e.g., at the start and at the end of charging) can be used to determine what a vehicle may need, how long it may need to charge, and in some examples may also better indicate a potential ROI from a charge point. Charge point utilization prediction, as described herein, may be used to help predict ROI; however, the actual ROI of an EV charge point depends on revenue, which is based on the price of energy (kilowatt-hours) and the amount of energy provided through the charge point. The amount of energy provided may vary over time even with a single vehicle. Different amounts of energy may be delivered to a vehicle depending on the vehicle that is charging and how close to capacity the battery is. Charging speed or the amount of energy provided to a vehicle will decrease when a battery is nearing capacity (e.g., above 80% full capacity). Data from vehicle sensors or charge detail records can help predict energy supplied through an electrical network. Charge point utilization as a percent duty cycle for a charge point is important for understanding where charge points are needed; however, as charging time does not correlate directly with the amount of power dispensed, utilization does not necessarily correlate exactly with ROI.

Information pertaining to EVs which may be received from an OEM or other service provider an include OEM vehicle specifics, such as battery capacity, charging type (e.g., connector, charge compatibility), etc. EV information can also include sensor data, which can include trajectory information (e.g. an origin and destination), a battery charge level at the beginning and end of a trajectory or drive, home charging events (e.g., including duration, energy delivered, time, battery levels), parking events, etc. This information may be anonymized, such as by an OEM, as the personally identifying information is not necessary for determining EV charge point utilization as described herein. However, general location information may be useful to identify where charging events occur, where vehicle trips begin and end, etc.

According to some embodiments, the OEM 104 may include a charge point service provider or a charge point information service. Charge point service providers (e.g., a power/fuel company) or a charge point information service (e.g., a charge point finder app) can be sources of rich data that can inform charge point utilization, state-of-charge of vehicles that use the charge points, historical charge point information (e.g., price, utilization, daily/weekly/seasonal fluctuations, etc.), and other information associated with charge points that can be used to train a machine learning model capable of predicting charge point utilization at a candidate location. It will be understood that changes in electricity price may result in changes in user behavior which can directly alter the technical behavior of the electrical system, i.e., it may change utilization levels for new or existing EV charge points and the amounts of electrical power flowing through different parts of the electrical grid required to support the EV charge points.

The map database 108 may include node data, road segment data or link data, point of interest (POI) data, or the like. The map database 108 may also include cartographic data, routing data, and/or maneuvering data. According to some example embodiments, the road segment data records may be links or segments representing roads, streets, or paths, as may be used in calculating a route or recorded route information for determination of one or more personalized routes. The node data may be end points corresponding to the respective links or segments of road segment data. The road link data and the node data may represent a road network, such as used by vehicles, cars, trucks, buses, motorcycles, and/or other entities.

Optionally, the map database 108 may contain path segment and node data records or other data that may represent pedestrian paths or areas in addition to or instead of the vehicle road record data, for example. The road/link segments and nodes can be associated with attributes, such as geographic coordinates, street names, address ranges, speed limits, turn restrictions at intersections, and other navigation related attributes, as well as POIs, such as fueling stations, hotels, restaurants, museums, stadiums, offices, auto repair shops, buildings, stores, parks, etc. The map database 108 can include data about the POIs and their respective locations in the POI records. The map database 108 may include data about places, such as cities, towns, or other communities, and other geographic features such as bodies of water, mountain ranges, etc. Such place or feature data can be part of the POI data or can be associated with POIs or POI data records (such as a data point used for displaying or representing a position of a city). In addition, the map database 108 can include event data (e.g., traffic incidents, construction activities, scheduled events, unscheduled events, etc.) associated with the POI data records or other records of the map database 108.

The map database 108 may be maintained by a content provider e.g., a map developer. By way of example, the map developer can collect geographic data to generate and enhance the map database 108. There can be different ways used by the map developer to collect data. These ways can include obtaining data from other sources, such as municipalities or respective geographic authorities. In addition, the map developer can employ field personnel to travel by vehicle along roads throughout the geographic region to observe features and/or record information about them, for example. Also, remote sensing, such as aerial or satellite photography, can be used to generate map geometries directly or through machine learning as described herein.

The map database 108 may be a master map database stored in a format that facilitates updating, maintenance, and development. For example, the master map database or data in the master map database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data may be compiled (such as into a platform specification format (PSF) format) to organize and/or configure the data for performing navigation-related functions and/or services, such as route calculation, route guidance, map display, speed calculation, distance and travel time functions, and other functions, by a navigation device, such as by mobile device 114, for example. The navigation-related functions can correspond to vehicle navigation, pedestrian navigation, or other types of navigation. While example embodiments described herein generally relate to vehicular travel, example embodiments may be implemented for bicycle travel along bike, watercraft travel along maritime navigational routes, etc. The compilation to produce the end user databases can be performed by a party or entity separate from the map developer. For example, a customer of the map developer, such as a navigation device developer or other end user device developer, can perform compilation on a received map database in a delivery format to produce one or more compiled navigation databases.

As mentioned above, the server side map database 108 may be a master geographic database, but in alternate embodiments, a client side map database 108 may represent a compiled navigation database that may be used in or with end user devices (e.g., mobile device 114) to provide navigation and/or map-related functions. For example, the map database 108 may be used with the mobile device 114 to provide an end user with navigation features. In such a case, the map database 108 can be downloaded or stored on the end user device (mobile device 114) which can access the map database 108 through a wireless or wired connection, such as via a processing server 102 and/or the network 112, for example.

In one embodiment, the mobile device 114 can be an in-vehicle navigation system, such as an ADAS, a personal navigation device (PND), a portable navigation device, a cellular telephone, a smart phone, a personal digital assistant (PDA), a watch, a camera, a computer, and/or other device that can perform navigation-related functions, such as digital routing and map display. An end user can use the mobile device 114 for navigation and map functions such as guidance and map display, for example, and for determination of one or more personalized routes or route segments based on one or more calculated and recorded routes, according to some example embodiments.

An ADAS may be used to improve the comfort, efficiency, safety, and overall satisfaction of driving. Examples of such advanced driver assistance systems include semi-autonomous driver assistance features such as adaptive headlight aiming, adaptive cruise control, lane departure warning and control, curve warning, speed limit notification, hazard warning, predictive cruise control, adaptive shift control, among others. Other examples of an ADAS may include provisions for fully autonomous control of a vehicle to drive the vehicle along a road network without requiring input from a driver. Some of these advanced driver assistance systems use a variety of sensor mechanisms in the vehicle to determine the current state of the vehicle and the current state of the roadway ahead of the vehicle. These sensor mechanisms may include radar, infrared, ultrasonic, and vision-oriented sensors such as image sensors and light distancing and ranging (LiDAR) sensors. Further, an ADAS can report charge status of an electric vehicle and charging events and locations.

Some advanced driver assistance systems may employ digital map data. Such systems may be referred to as map-enhanced ADAS. The digital map data can be used in advanced driver assistance systems to provide information about the road network, road geometry, road conditions, and other information associated with the road and environment around the vehicle. Unlike some sensors, the digital map data is not affected by the environmental conditions such as fog, rain, or snow. Additionally, the digital map data can provide useful information that cannot reliably be provided by sensors, such as curvature, grade, bank, speed limits that are not indicated by signage, lane restrictions, and so on. Further, digital map data can provide a predictive capability well beyond the driver's vision to determine the road ahead of the vehicle, around corners, over hills, or beyond obstructions. Accordingly, the digital map data can be a useful and sometimes necessary addition for some advanced driving assistance systems. In the example embodiment of a fully-autonomous vehicle, the ADAS uses the digital map data to determine a path along the road network to drive, such that accurate representations of the road are necessary, such as accurate representations of intersections and turn maneuvers there through.

The processing server 102 may receive probe data, directly or indirectly, from a mobile device 114, such as when the service provider is functioning as the OEM 104. Optionally, the service provider 116 may receive probe data indirectly from the mobile device 114, such as when the mobile device 114 provides probe data to the OEM 104, and the OEM provides certain elements of the probe data to the service provider 116. The OEM 104 may anonymize the probe data or otherwise process the probe data to maintain privacy of a user of the mobile device 114 before providing the data to the service provider 116. The mobile device 114 may include one or more detectors or sensors as a positioning system built or embedded into or within the interior of the mobile device 114. Alternatively, the mobile device 114 uses communications signals for position determination. The mobile device 114 may receive location data from a positioning system, such as a Global Navigation Satellite System (GNSS) like the global positioning system (GPS) Galileo, etc., cellular tower location methods, access point communication fingerprinting, or the like. The server 102, either directly or indirectly, may receive sensor data configured to describe a position of a mobile device, or a controller of the mobile device 114 may receive the sensor data from the positioning system of the mobile device 114. The mobile device 114 may also include a system for tracking mobile device movement, such as rotation, velocity, or acceleration. Movement information may also be determined using the positioning system. The mobile device 114 may use the detectors and sensors to provide data indicating a location of a vehicle. This vehicle data, also referred to herein as "probe data", may be collected by any device capable of determining the necessary information, and providing the necessary information to a remote entity. The mobile device 114 is one example of a device that can function as a probe to collect probe data of a vehicle.

More specifically, probe data (e.g., collected by mobile device 114) may be representative of the location of a vehicle at a respective point in time and may be collected while a vehicle is traveling along a route, at the origin of the route, a destination, or waypoints along the route. Probe data of some example embodiments may include charge status of a vehicle. According to the example embodiment described below with the probe data being from motorized vehicles traveling along roadways, the probe data may include, without limitation, location data, (e.g. a latitudinal, longitudinal position, and/or height, GNSS coordinates, proximity readings associated with a radio frequency identification (RFID) tag, or the like), rate of travel, (e.g. speed), direction of travel, (e.g. heading, cardinal direction, or the like), device identifier, (e.g. vehicle identifier, user identifier, or the like), a time stamp associated with the data collection, or the like. The mobile device 114, may be any device capable of collecting the aforementioned probe data. Some examples of the mobile device 114 may include specialized vehicle mapping equipment, navigational systems, mobile devices, such as phones or personal data assistants, or the like. Further, this probe data may include battery charge level or other contextual information about a source of the probe data that may provide inputs to the service provider 116 for establishing where an EV charge point would be most beneficial and in some cases where such an EV charge point would provide the greatest ROI.

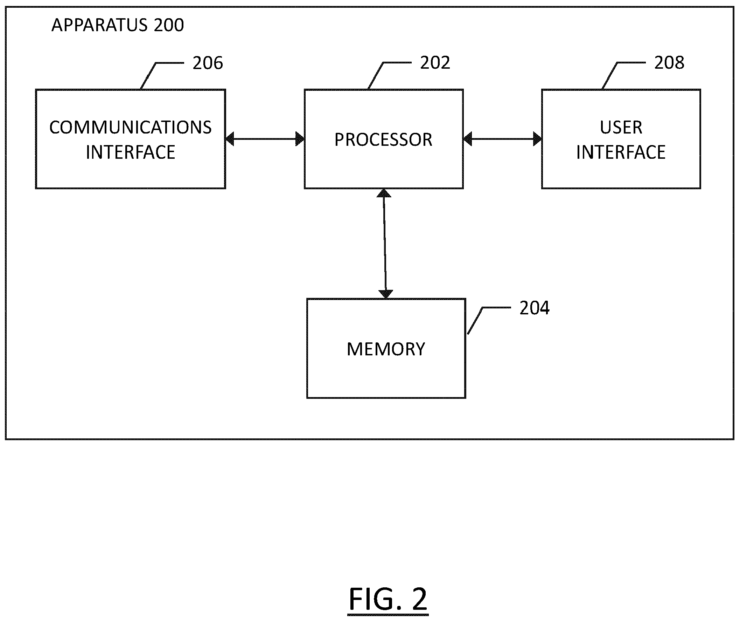

An example embodiment of a processing server 102 and/or an OEM 104 may be embodied in an apparatus as illustrated in Figure 2. The apparatus, such as that shown in Figure 2, may be specifically configured in accordance with an example embodiment of the present disclosure for predicting EV charge point utilization through geospatial data processing, regression analysis, and supervised machine learning. The apparatus may include or otherwise be in communication with a processor 202, a memory device 204, a communication interface 206, and a user interface 208. In some embodiments, the processor (and/or co-processors or any other processing circuitry assisting or otherwise associated with the processor) may be in communication with the memory device via a bus for passing information among components of the apparatus. The memory device may be non-transitory and may include, for example, one or more volatile and/or non-volatile memories. In other words, for example, the memory device may be an electronic storage device (for example, a computer readable storage medium) comprising gates configured to store data (for example, bits) that may be retrievable by a machine (for example, a computing device like the processor 202). The memory device may be configured to store information, data, content, applications, instructions, or the like, for enabling the apparatus to carry out various functions in accordance with an example embodiment of the present invention. For example, the memory device could be configured to buffer input data for processing by the processor. Additionally or alternatively, the memory device could be configured to store instructions for execution by the processor.

The processor 202 may be embodied in a number of different ways. For example, the processor may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining and/or multithreading.

In an example embodiment, the processor 202 may be configured to execute instructions stored in the memory device 204 or otherwise accessible to the processor. Alternatively or additionally, the processor may be configured to execute hard coded functionality. As such, whether configured by hardware or software methods, or by a combination thereof, the processor may represent an entity (for example, physically embodied in circuitry) capable of performing operations according to an embodiment of the present invention while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor to perform the algorithms and/or operations described herein when the instructions are executed. However, in some cases, the processor may be a processor specific device (for example, a mobile terminal or a fixed computing device) configured to employ an embodiment of the present invention by further configuration of the processor by instructions for performing the algorithms and/or operations described herein. The processor may include, among other things, a clock, an arithmetic logic unit (ALU) and logic gates configured to support operation of the processor.

The apparatus 200 of an example embodiment may also include a communication interface 206 that may be any means such as a device or circuitry embodied in either hardware or a combination of hardware and software that is configured to receive and/or transmit data to/from a communications device in communication with the apparatus, such as to facilitate communications with one or more user equipment 104 or the like. In this regard, the communication interface may include, for example, an antenna (or multiple antennae) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware and/or software for supporting communication via cable, digital subscriber line (DSL), universal serial bus (USB) or other mechanisms.

The apparatus 200 may also include a user interface 208 that may in turn be in communication with the processor 202 to provide output to the user and, in some embodiments, to receive an indication of a user input. As such, the user interface may include a display and, in some embodiments, may also include a keyboard, a mouse, a joystick, a touch screen, touch areas, soft keys, one or more microphones, a plurality of speakers, or other input/output mechanisms. In one embodiment, the processor may comprise user interface circuitry configured to control at least some functions of one or more user interface elements such as a display and, in some embodiments, a plurality of speakers, a ringer, one or more microphones and/or the like. The processor and/or user interface circuitry comprising the processor may be configured to control one or more functions of one or more user interface elements through computer program instructions (for example, software and/or firmware) stored on a memory accessible to the processor (for example, memory device 204, and/or the like).

As discussed above, EV charging infrastructure requires substantial improvement and expansion to meet the demands of a rapidly-increasing number of EVs on the road. Embodiments described herein provide a method through which EV charge points can be most effectively deployed and developed in locations that would benefit from them the most, and the EV charge points would enjoy the greatest utilization. Embodiments convert location data into a site value reflecting a relative score for a location for a potential EV charge point, with the relative score providing an indication of the predicted utilization of an EV charge point at that location. The site value for a particular site may be based on the predicted utilization of an EV charge point at that location. A relatively high score reflects a relatively high predicted utilization, while a relatively low score reflects a relatively low predicted utilization. Predicted utilization for EV charge points may further be used to design changes to the electrical power network that powers the EV charge points. Advantageously, this may provide for more efficient electrical power networks that can better support new EV charge points.

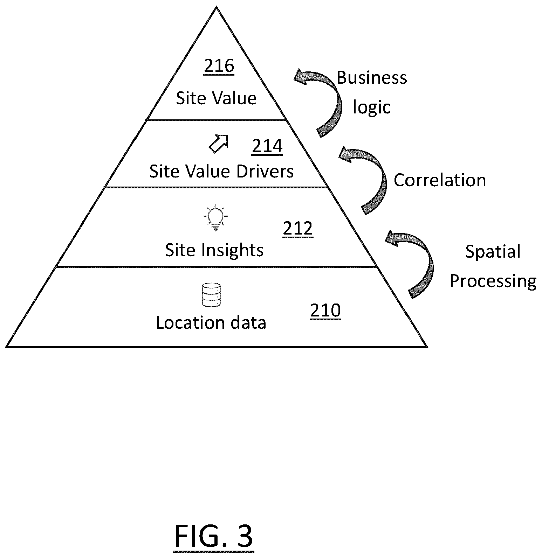

Figure 3 illustrates a schematic of a principle of converting location data into a site value according to example embodiments provided herein, where the site value includes an indication of the predicted EV charge point utilization. As shown, location data including a location reference and some asset, place, or occurrence is gathered at 210. This is gathered, for example, through mobile devices 114 and/or OEMs 104 as described above. At 212, site insights are gathered with information about a specific site that is derived from one or more location datasets through geospatial processing. Site insights include any form of information that is informative about a specific location ranging from points-of-interest proximate the site to population densities or other useful information as described below. Site insights can include static map features associated with a location and dynamic features associated with the location. Site value drivers are identified at 214 including a prediction of one or more metrics derived from one or more correlated insights. These value drivers are a key component of the overall site value and/or performance. The site value is established at 216 using business value or score for a site derived from underlying drivers through business logic as detailed further below. In this manner, location data is used to generate site value to predict the utilization of an EV charge point at the respective location. In other examples, a recommended number of EV charge points may be generated for each candidate location. The recommended number of EV charge points may be based on the predicted utilization of an EV charge point at the location. Where the predicted utilization for a particular location exceeds 100% of the capacity of an individual EV charge point, for at least some threshold proportion of the time, then the recommended number may be selected to ensure that predicted utilization can be satisfied, for at least a threshold proportion of time. For example, if the predicted utilization is 280%, then the recommended number of charge points may be 3.

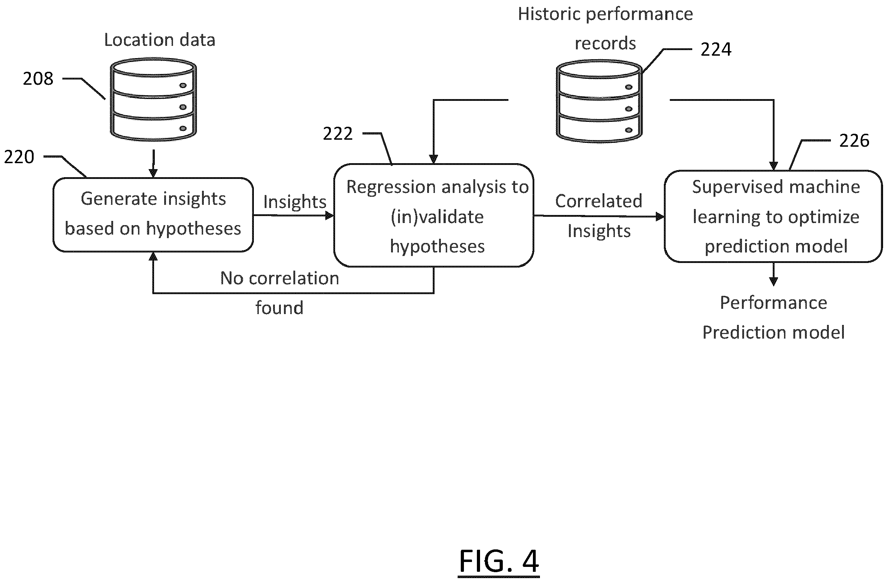

Figure 4 illustrates the process of Figure 3 where location data is received and processed at database 208, which may correlate with map database 108 of the service provider 116 of Figure 1. Insights relating to sites in the location data are generated at 220, and provided for regression analysis at 222 to either confirm/validate the hypothesis or invalidate the hypothesis using the regression analysis informed by historic performance records of EV charge points, the utilization of those EV charge points, and information relating to the site of the respective EV charge points. If no correlation is found through the regression analysis, the result is returned for another hypothesis to be generated at 220. If the hypothesis regarding the insights are confirmed, correlated insights are provided for supervised machine learning at 226 together with historic performance records 224 of EV charge points (e.g., utilization) to optimize a prediction model. The prediction model optimized by machine learning at 226 provides a performance prediction model which is used to predict the utilization of an EV charge point at a given location based on the information about the site and the insights therefrom.

The location data, such as in location database 208 and/or map database 108 includes a comprehensive database of existing EV charge points, other relevant points-of-interest (POI, e.g., retail stores, entertainment venues, restaurants, tourist attractions, or any other location that people may seek out), traffic patterns, and a map of the road network. The data associated with charge points can further include location specifics, charging modes (e.g., direct current, single/multi-phase alternating current, etc.), plug types including wireless induction charging, number of connectors, etc. Charging point utilization information may not be available through the location database, but may be available through a charge point service provider or information service. The charging point utilization information can include usage time windows, kilowatt-hours delivered, number of vehicles connected, plug standards in use, idle/inactive time windows, delivered charge mode, delivered voltages, vehicle charge states, etc. This information may be in the form of static data accessed through API queries or may be live-streamed data from a charge point service. Through the spatial processing and advanced routing algorithms, location data is converted into site insights such as EV charging alternatives, highway accessibility, POI proximity, etc. as shown at 220. Through regression analysis at 222, it is determined which site insights significantly correlate with EV charge point utilization. A comprehensive record of historic charge point utilization can be used as input for supervised machine learning to determine the combinations of insights and weighting factors that most accurately predict utilization of EV charge points. The utilization is established as the site value since EV charge point utilization dictates ROI and benefit to the EV-buying public.

Embodiments provided herein determine the information inputs in static map data or features and dynamic data or features are liked to and affect the performance (utilization) of an EV charge point, and those information inputs are used to predict the utilization of an EV charge point at a given location. These locations can be scored and/or ranked to determine the most effective location for an EV charge point where it will benefit from the highest utilization. While EV charge points can presently be selected based on access to the electrical grid, the volume of car traffic, and historical information related to other EV charge points, embodiments described herein learn the key inputs that determine a predicted utilization of an EV charge point, and use those inputs to assess locations for installation of an EV charge point. Further, these inputs can vary based on the location, where a subset of inputs (static and dynamic information) deemed highly relevant to the utilization of an EV charge point in one region (e.g., rural areas) may be different than a subset of inputs deemed highly relevant to the utilization of an EV charge point in an urban or suburban region.

Static map features associated with EV charge points can include features such as a functional class of road on which a charge point is situated or is most readily accessed and proximity to roads of a more significant functional class, such as restricted access highways and multi-lane roadways that suggest more traffic will pass proximate the EV charge points. Other static map features can include the number of residential units capable of home charging within a predetermined radius or travel time, EV charging alternatives within a certain travel time or distance, POI proximity, POI type, POI density, parking availability, EV density (e.g., by registration), etc. Static data can further include a database of EV models and their respective density in an area. The database of EV models can include battery capacity, charging characteristics (charge type, plug type, etc.) which can inform what type of EV charge point may be most beneficial for an area. Static information can optionally include charge point competition (e.g., number of charging alternatives). Static and dynamic map features may correspond to road network attributes for road segments or links within a threshold distance from a location (e.g., a charge point location or a candidate location). The distance may be measured in time (e.g., travel time to the location), straight line distance, travel distance, or the like. The distance for static map features from a location (e.g., from a candidate location for a charge point) may be calculated using a reverse isoline process to better define reachability of the location from various points. For example, a candidate location for a fast-charging station that is adjacent a highway, but not near an exit of the highway may be much less likely to be utilized than a candidate location that may be further away from the highway, but easily reached from an exit to facilitate easy-off/easy-on highway stops for a vehicle. This applies to all static map features, as a charge point near a large shopping center may be desirable; however, if that charge point is separated from the shopping center by a highway or other formidable obstacle, the relative value of the shopping center to the charge point may be diminished.

Embodiments described herein enable EV charge point planners, such as EV manufacturers, charge point manufacturers, municipalities, etc. to determine the best locations for new EV charge points including potentially adding EV charge points at locations that have a number of charge points below their optimum number. Embodiments determine which signals or data elements in static map data and in dynamic data are needed to predict the performance of an EV charge point. A vector is defined of the relevant map features, and the vector may be a function of time. For a vector including static and dynamic features with a temporal component are generated by a system that learns the relationships between in-use EV charge points and associated static and dynamic map features to inform a model. The model is trained to infer and estimate charge point utilization for candidate EV charge points based on a selected location. This model can be used to rank candidate EV charge points based on their utilization, with higher utilization equating to a higher score and potentially greater ROI. The kilowatt-hours provided from a charging point can be a valuable measure of charge point utilization since charging cost is based on kilowatt-hours. Existing EV charge points can be improved (e.g., increasing utilization) by determining the combination of factors that will lead to a higher utilization at that location. For instance, if a charge point proximate a coffee shop increases utilization, a coffee shop could be incentivized to open proximate the existing charge point through subsidies or demonstration of a symbiotic business plan.

According to embodiments described herein, inputs to the system to predict charge point utilization includes, for existing EV charge points: capacity, map and road attributes (e.g., road class), parking availability, traffic data (e.g., daily vehicles traversing proximate the charge point), lane attributes, POIs within predefined distance thresholds, POI categories thereof, dynamic traffic data, dynamic weather data, dynamic population data, etc. Using all of this information available about a plurality EV charge points, the inputs that impact the utilization of the respective charge points can be learned through machine learning. Candidate locations for EV charge points can be scored and/or ranked based on their predicted utilization. When no candidate locations are provided, optimal locations can be identified through embodiments described herein. Further, business cases can be made for EV charge points based on utilization to determine ROI.

A vector map of features is defined herein is the structural description of an area based on a set of map attributes. Such vectors may include attributes such as: POI categories proximity and density (e.g., restaurants, cinema, shops, fitness studios/gyms, etc.), functional classes of streets, proximity to highways, proximity to parks or other map features, building footprints, number of floors for buildings, population density, types of POIs, etc. These vectors can be used to determine which signals in static map data and dynamic data are linked to the performance of an EV charge point.

The process of an example embodiment begins with location data, such as from location database 208 or map database 108, with the location data including static map features as described above. Dynamic data, such as traffic data at the road segment level, weather, time of day, season of year, etc. is obtained as additional inputs. For locations or sites having EV charge points, supervised machine learning is performed using the utilization of the EV charge points and each charge point's static and dynamic data. This defines the utilization of EV charge points and all relevant information about the respective site. Data features that correlate with EV charge point utilization are identified such that they can be used to predict EV charge point utilization at a selected site. A new vector is input with the map features as described above and a time component. Based on the vector, embodiments output a predicted charge point utilization for the time component at the location corresponding to the vector. For a given charge point, utilization may vary over time due to the dependencies as patterns in the input data may change. For example, a charge point utilization may be 25% for a location; however, during business hours, that utilization may be near 100%.

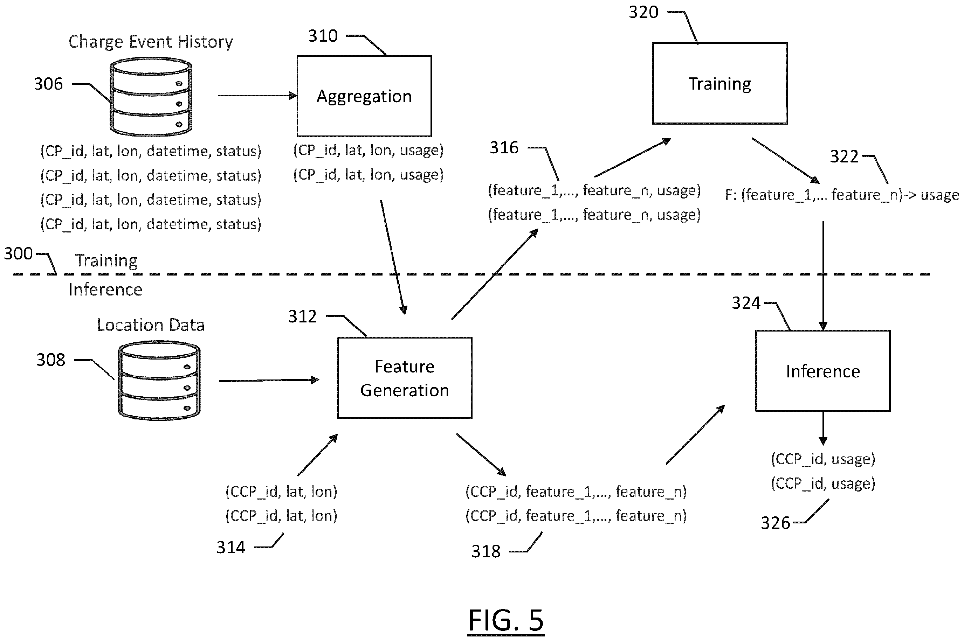

Figure 5 illustrates another example embodiment of the training of the machine learning model used to predict EV charge point utilization. As shown, there is a training portion above line 300 and an inference portion below line 300. Location data 308 includes a variety of information, such as EV registration for an area, vehicle ownership, traffic information, road network information, land use, population density, vehicle visitor statistics (e.g., non-resident vehicles), POI type and density, EV charge points, EV charge point coverage, residential charging points, etc. Charge point history 306 includes the use of existing charge points based on their identification (CP id), location (latitude, longitude), date and time (e.g., a timestamp), vehicle status (e.g., charge status of a vehicle using the charge point), and charge point status (e.g., number of kilowatt-hours supplied to vehicles). The charge event history information is aggregated at 310 to establish utilization of the respective charge points. The location data 308 and the charge point utilization from aggregation 310 are used as inputs to the feature generation 312. Further, candidate charge points (CCP id) and their respective locations (latitude, longitude) are used as inputs at 314 for feature generation. The feature generation identifies static map features and dynamic features based on the location data 308 and outputs features, both static and dynamic and corresponding usage at 316. Candidate charge point features are identified at feature generation 312 and output at 318 as the candidate charge point identifier together with the respective static and dynamic features.

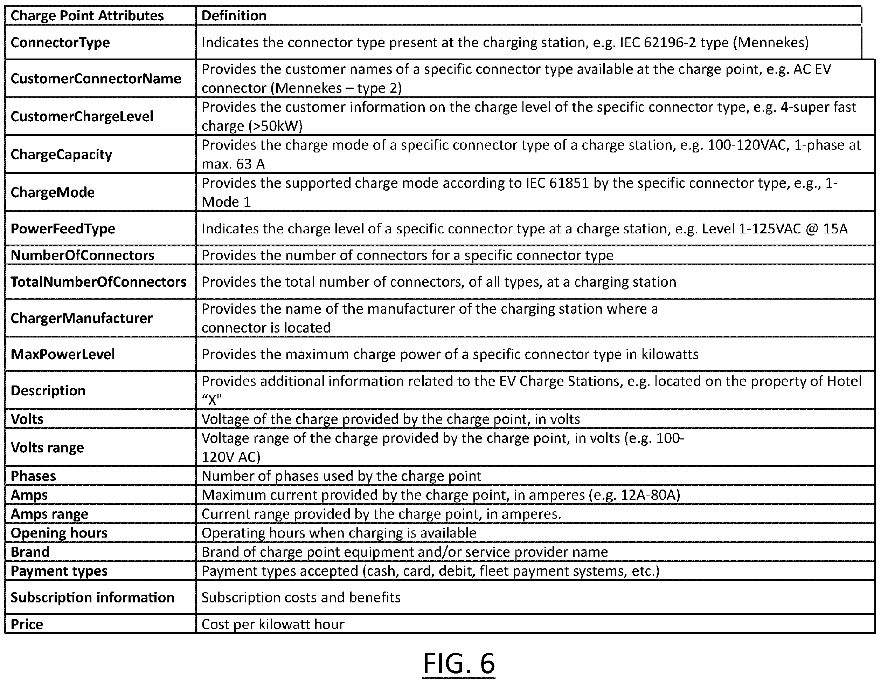

The machine learning model is trained using a large corpus of data and data types. For charge events and for existing EV charge points, attributes of the charge points may be included in the map/location data 308 and/or in the charge event history 306. Examples of these charge point attributes are reflected in the table of Figure 6 which depicts charge point attributes and their respective definitions. These attributes are not limiting, but examples of charge point attributes that may be used in the machine learning model as described herein.

The location data 308 can further include a variety of information pertaining to the location that is static information. The location data may indicate if the charge point is located along (or within a predefined distance) of various functional classes of road. Location data may indicate a distance or travel time to the closest highway or major roadway. Location data may provide indications of the competitive pressure on a charge point at the specific location, such as the number of residential charging points within a predetermined distance (e.g., within a ten minute walk). The location data may further provide an indication of the number of charging alternatives within predefined ranges of travel time and/or travel distance, with fewer charging options proximate a location increasing the predicted utilization of an EV charge point at that location. Location data may include an attractiveness factor, such as POI proximity, cost of charging, average dwell time of people within the area, a number of EV charging events in the vicinity and the duration thereof, etc. Dynamic features of a location may include EVs within a predetermined distance of a location at various times throughout a day and the range of EVs within the area. Static map data associated with EVs may include the number of registered EVs within a predetermined distance of a location, the number of EVs registered within a postal code of the location, or the like. This location-based information may be used to train the machine learning model, and used as input elements associated with a candidate location for an EV charge point to obtain an accurate estimate of the predicted utilization of an EV charge point at the candidate location.

The machine learning model is trained at 320 using the sets of static and dynamic features and usage corresponding to the sets of static and dynamic features from 316. This training correlates the different features, static and dynamic, with EV charge point utilization. Some features will negatively impact charge point utilization while other features will positively impact charge point utilization. For example, a charge point in a heavily residential suburban area may have relatively low utilization as many EV drivers may choose to charge their vehicles at their homes. The model describes a function relating feature sets to EV charge point utilization rates at 322. Using this information and using candidate charge point feature sets at 318 as inputs, an inference can be made at 324 to determine a predicted candidate charge point utilization at 326. This predicted candidate charge point utilization can be used to establish ROI of a candidate EV charge point and to determine a business case for such a charge point. Further, the candidate charge points may be ranked based on utilization, or further, ranked based on their estimated ROI using the predicted utilization.

According to example embodiments described herein, determining ROI for a candidate location for an EV charge point includes an analysis of predicted utilization for the EV charge point at the candidate location, a cost to construct the EV charge point (including connecting to the electrical grid, where the cost may be a resource amount such as the amount of additional electrical grid infrastructure required), a cost of land associated with the location, electricity rates at the location, maintenance of the EV charge point, and a competitive price point that would optimize utilization. Each of these factors may be considered when evaluating a location for an EV charge point with the greatest utilization. While EV charge point utilization is important, if the cost to install and maintain an EV charge point is significantly higher in one location relative to another, a location with a lower installation/maintenance cost may be preferable even if the utilization is relatively lower. While EV charge points may be ranked according to utilization, embodiments may further rank EV charge points based on an ROI analysis that factors in all of these considerations when weighing where to locate a new EV charge point. The determination of where to situate new EV charge points may be used to determine efficient modifications or upgrades to the electrical grid infrastructure.

In addition to determining predicted utilization of EV charge points for given locations, embodiments may use the machine learning model to predict locations that will have relatively high EV charge point utilization by identifying locations in one area that has high utilization, determining static map features and dynamic features associated with such a location, and subsequently finding a location in another area that has similar static map features and dynamic features. The static map features and dynamic features may account for traffic densities upstream and/or downstream of road network features such as intersections and may also account for correlations between utilization of existing EV charge points and thereby may be relevant to determining utilization of new EV charge points. For example, if an EV charge point in a first city proximate an area densely populated with retail stores and restaurants has a high utilization, an area in another city proximate an area densely populated with retail stores and restaurants may be a good candidate for an EV charge point with a predicted high utilization. An operator may define a geographic area, such as on a user interface along, where the user interface can return a heatmap overview of the geographic area reflecting the predicted utilization at locations within the geographic area. Locations within the geographic area may be identified based on availability for a candidate charge point or locations may be randomly overlaid on the geographic area. For each of these locations, a predicted charge point utilization is generated by the machine learning model, and indicated through a graphical user interface element. For example, a color range could identify the predicted charge point utilization, where green indicates a relatively high predicted utilization, and red indicating a relatively low utilization. A threshold utilization may be used below which locations are not considered candidate charge point locations. Using such a threshold, only locations within the geographic area that satisfy a minimum predicted charge point utilization may be shown.

In addition to identifying a predicted charge point utilization, embodiments may provide an indication of the charge point attributes that are most likely to bring the greatest return on investment. For example, if a particular brand of EV charge point would be more successful and have a higher utilization in an area based on learned behaviors from charge points in the area. Referring again to the table of Figure 6, an EV charge point can have recommended attributes to maximize utilization, and the different charge point attributes can be used to recommend different aspects of an EV charge point that is predicted to be most successful. Embodiments can predict a utilization based on a price or cost per kilowatt-hour, opening hours, payment types, connector types available, charging capacity, etc.

Example embodiments provided herein train a machine learning model to identify features, both static and dynamic, associated with a location that influence EV charge point utilization, and use those identified features to predict EV charge point utilization at candidate locations for EV charge points. Machine learning iteratively assesses which features are important and finds the best way to define the features. Using supervised machine learning ensures that combinations of features are considered resulting in the optimal prediction algorithm. This enables the interaction of features to be weighed in addition to the weights of individual features in contributing to the utilization of a charge point.

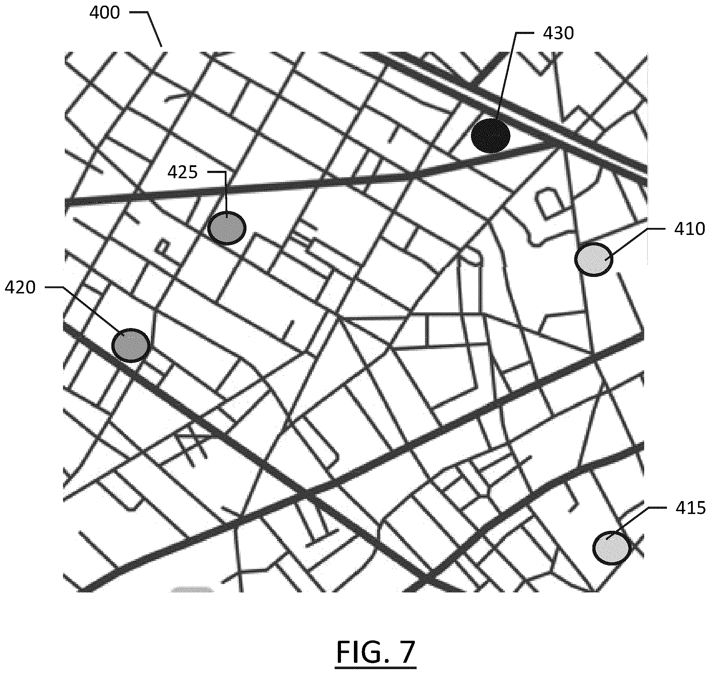

Embodiments of the present disclosure may provide information to a user regarding predicted utilization of EV charge points at a plurality of candidate locations to inform the user as to where an optimal location may be found. In some examples, a map may be divided into a grid, where each element of the grid is a candidate location. The candidate locations may thereby cover the whole area of the map in any form of grid tiling. In other examples, a map may contain candidate locations that cover defined areas of the map that make up only a subset of the total map area. In such cases, the candidate locations may comprise available sites where EV charge points may be installed, which may include existing urban areas and/or greenfield sites. Figure 7 illustrates an example embodiment of a representation of a map including a plurality of candidate locations for EV charge points, where the candidate locations are visually distinguished based on their predicted EV charge point utilization generated by the model described herein. As shown, a map 400 of a geographical area including a plurality of candidate locations (410-430) therein. Each candidate location may be processed by the machine learning model described herein, where features of the location (e.g., static map features and/or dynamic features of the location) are used by the machine learning model to predict how an EV charge point would perform at the respective candidate locations based on a measure of predicted utilization. The candidate locations of Figure 7 are illustrated to be visually distinguished based on their predicted utilization. For example, candidate location 410 and candidate location 415 are shown with a light shading indicating that predicted utilization of an EV charge point at these locations would be relatively low. Candidate location 420 and candidate location 425 are shown with a darker shading indicating that the predicted utilization of an EV charge point at these locations would be higher than those of candidate locations 410 and 415. This may be due to their proximity to busier roads or roads of a more significant functional class, illustrated by heavier-weighted lines in the map 400. Candidate location 430 is shaded the darkest of the candidate locations shown illustrating that the predicted utilization of an EV charge point at candidate location 430 is the highest of the candidate locations shown. This may be due to the location being at the confluence of more heavily traveled roads. While a degree of shading is used to visually distinguish candidate locations in Figure 6, any type of visual distinction may be used, such as highlighting, brightness of location markers, color of location markers, or any visual distinction that can convey a degree or measure of the predicted utilization of charge points at the respective candidate locations.

According to an example embodiment provided herein, the machine learning model can be modified to include as-of-yet unimplemented EV charge points along with their predicted utilization to determine how such a charge point would affect existing EV charge points, and to determine locations for additional charge points. In this manner, learning data may be generated for a machine learning model artificially to incorporate planned, but not yet online EV charge points to assist in more rapid development of an efficient and effective EV charging infrastructure.

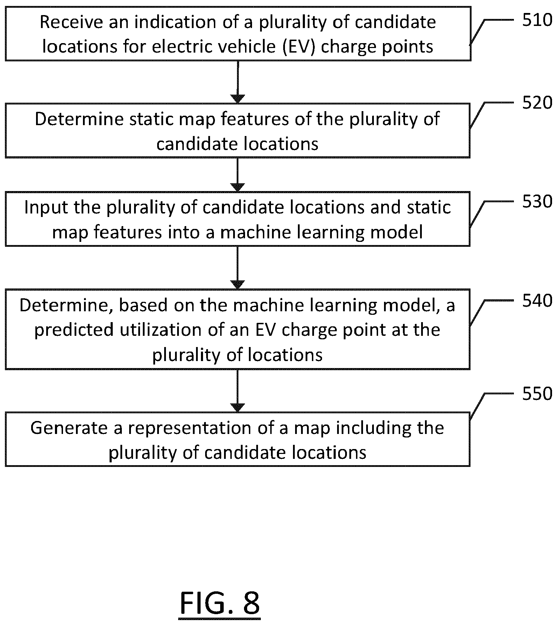

Figure 8 illustrates a flowchart depicting methods according to an example embodiments of the present disclosure. It will be understood that each block of the flowcharts and combination of blocks in the flowcharts may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory device 204 of an apparatus employing an embodiment of the present invention and executed by a processor 202 of the apparatus. As will be appreciated, any such computer program instructions may be loaded onto a computer or other programmable apparatus (for example, hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

Figure 8 illustrates a method of determining a predicted utilization of an EV charge point at a candidate location. In the illustrated embodiment, an indication of a plurality of candidate locations for electric vehicle (EV) charge points is received at 510. Static map features of the plurality of candidate locations are received at 520. These static map features may include, for example, one or more of: point-of-interest (POI) categories proximity to the candidate location, POI categories density relative to the candidate location, functional class of road proximate the candidate location, or population density proximate the candidate location. The plurality of candidate locations and corresponding static map features are input into a machine learning model at 530. The machine learning model of example embodiments is trained using existing EV charge point locations, existing EV charge point static map features, and existing EV charge point utilization. Based on the machine learning model, a predicted utilization of a charge point at each of the plurality of locations is determined at 540. A representation of a map including the plurality of candidate locations is generated at 550, where candidate locations of the plurality of candidate locations are visually distinguished based on a respective predicted utilization of an EV charge point at the candidate locations.

In an example embodiment, an apparatus for performing the method of Figure 8 above may comprise a processor (e.g., the processor 202) configured to perform some or each of the operations (510-550) described above. The processor may, for example, be configured to perform the operations (510-550) by performing hardware implemented logical functions, executing stored instructions, or executing algorithms for performing each of the operations. Alternatively, the apparatus may comprise means for performing each of the operations described above. In this regard, according to an example embodiment, examples of means for performing operations 510-550 may comprise, for example, the processor 202 and/or a device or circuit for executing instructions or executing an algorithm for processing information as described above.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A computer-implemented method comprising:
receiving an indication of a plurality of candidate locations for electric vehicle "EV" charge points;
determining static map features of the plurality of candidate locations;
processing the plurality of candidate locations and static map features using a machine learning model, the machine learning model trained on existing EV charge point locations, existing EV charge point static map features, and existing EV charge point utilization;
determining, based on the machine learning model, a respective predicted utilization of a respective EV charge point at each of the plurality of candidate locations; and
generating a representation of a map including the plurality of candidate locations,
wherein candidate locations of the plurality of candidate locations are visually distinguished based on the respective predicted utilization of the respective EV charge point at each of the candidate locations.

2. The method of claim 1, further comprising:
ranking the plurality of candidate locations for EV charge points based on their respective predicted utilization of EV charge points at a corresponding location.

3. The method of claim 1, wherein candidate locations of the plurality of candidate locations are visually distinguished using one or more highlighting effects to represent the respective predicted utilization of EV charge points at the corresponding location.

4. The method of claim 1, wherein the static map features of a candidate location of the plurality of candidate locations forms a candidate location vector for the candidate location, wherein the candidate location vector is input to the machine learning model to determine the predicted utilization of an EV charge point at the candidate location.

5. The method of claim 1, further comprising one or more of:
generating a site value for each of the candidate locations of the plurality of candidate locations, wherein each site value is based on the respective predicted utilization of an EV charge point at the respective candidate location; and
generating a recommended number of EV charge points for each of the candidate locations of the plurality of candidate locations, wherein the number of EV charge points is based on the respective predicted utilization of an EV charge point at the respective candidate location.

6. A computer-implemented method comprising:
identifying existing electric vehicle "EV" charge points and their respective locations;
determining static map features for the locations of the existing EV charge points;
determining utilization of the existing EV charge points;
training a machine learning model on the static map features for the locations of the existing EV charge points and the utilization of the existing EV charge points; and
providing the trained machine learning model for use in predicting utilization of an EV charge point at a candidate location.

7. The method of claim 6, further comprising:
providing a candidate location and static map features associated with the candidate location; and
determining, based on the machine learning model using the candidate location and the static map features associated with the candidate location, a predicted utilization of an EV charge point at the candidate location.

8. The method of claim 7, further comprising determining dynamic features for the locations of the existing EV charge points,
wherein training the machine learning model on the static map features for the locations of the existing EV charge points and the utilization of the existing EV charge points comprises training the machine learning model on the static map features and dynamic features for the locations of the existing EV charge points and the utilization of the existing EV charge points, and
inputting to the machine learning model the candidate location and static map features associated with the candidate location comprises inputting to the machine learning model the candidate location, the static map features associated with the candidate location, and dynamic features associated with the candidate location.

9. The method of claim 8, wherein the static map features associated with the candidate location and the dynamic features associated with the candidate location form a candidate location vector, wherein the candidate location vector is input to the machine learning model.

10. The method of claim 9, wherein the static map features of the candidate location comprise one or more of: point-of-interest (POI) categories proximity to the candidate location, POI categories density relative to the candidate location, functional class of road proximate the candidate location, or population density proximate the candidate location.

11. The method of claim 10, wherein the dynamic map features of the candidate location comprise one or more of: traffic density proximate the candidate location, weather proximate the candidate location, population estimates proximate the candidate location, event information, time of day, day of week, or season of year.

12. The method of claim 6, further comprising:
inputting to the machine learning model a plurality of candidate locations for EV charge points and static map features associated with the candidate locations;
determining, based on the machine learning model, a predicted utilization of EV charge points at the plurality of candidate locations for EV charge points; and
ranking the plurality of candidate locations for EV charge points based on their respective predicted utilization of EV charge points at a corresponding location.

13. The method of claim 12, further comprising:
identifying a selected location from the plurality of candidate locations for EV charge points based on the ranked plurality of candidate locations for EV charge points; and
providing a recommendation for establishment of an EV charge point at the selected location.

14. The method of claim 12, further comprising:
generating a representation of a map encompassing the plurality of candidate locations; and
providing for visual distinction of the plurality of candidate locations based on predicted utilization of EV charge points at a corresponding location.

15. An apparatus or a computer program configured to perform the method of any preceding claim.
